(19) Europäisches Patentamt
European Patent Office
Office européen des brevets

(11) **EP 4 462 452 A1**

(12) **EUROPEAN PATENT APPLICATION**
published in accordance with Art. 153(4) EPC

(43) Date of publication:
**13.11.2024 Bulletin 2024/46**

(21) Application number: **22918754.7**

(22) Date of filing: **01.12.2022**

(51) International Patent Classification (IPC):
*H01B 13/00* (2006.01)          *C01B 25/14* (2006.01)
*H01G 11/56* (2013.01)          *H01M 10/0562* (2010.01)

(52) Cooperative Patent Classification (CPC):
**C01B 25/14; H01B 13/00; H01G 11/56;
H01M 10/0562;** Y02E 60/10

(86) International application number:
**PCT/JP2022/044389**

(87) International publication number:
**WO 2023/132167 (13.07.2023 Gazette 2023/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.01.2022 JP 2022000678**

(71) Applicant: **Idemitsu Kosan Co.,Ltd.
Tokyo 100-8321 (JP)**

(72) Inventor: **KAMBARA, Takayoshi
Tokyo 100-8321 (JP)**

(74) Representative: **Vossius & Partner
Patentanwälte Rechtsanwälte mbB
Siebertstrasse 3
81675 München (DE)**

(54) **METHOD FOR PRODUCING SULFIDE SOLID ELECTROLYTE**

(57)    Provided is a method for producing sulfide solid electrolyte having an argyrodite-type crystal structure, the method including mixing lithium sulfide, a phosphorus sulfide, and an ammonium halide to produce a solid electrolyte precursor, and firing the solid electrolyte precursor. The method for producing a sulfide solid electrolyte having an argyrodite-type crystal structure provides a method for easily producing a high-quality sulfide solid electrolyte without using an elemental halogen which complicates the handling or a lithium halide which has a considerably high hygroscopicity.

Fig. 1

Processed by Luminess, 75001 PARIS (FR)

## Description

Technical Field

The present invention relates to a method for producing a sulfide solid electrolyte.

Background Art

With rapid spread of information-related instruments, communication instruments, and so on, such as personal computers, video cameras, and mobile phones, in recent years, development of batteries that are utilized as a power source therefor is considered to be important. Heretofore, in batteries to be used for such an application, an electrolytic solution containing a flammable organic solvent has been used. However, development of all-solid-state batteries having a solid electrolyte layer in place of an electrolytic solution is being made in view of the fact that by making the battery fully solid, simplification of a safety unit may be realized without using a flammable organic solvent within the battery so that the battery is excellent in manufacturing costs and productivity. In addition, with spread of solid electrolytes, a technique for manufacturing a solid electrolyte having a higher quality in a more efficient manner is being focused on.

In addition, as a method for enhancing the ionic conductivity of solid electrolytes, a method in which an elemental halogen is used as a halogen source (see PTL 1) and a method in which a lithium halide is used as a halogen source (see PTL 2) are known.

Furthermore, in recent years, toward practical use of all-solid-state batteries, liquid-phase methods have come to draw attention not only due to its versatility and applicability but also as a method capable of mass-producing solid electrolytes in a simplified manner. The liquid-phase methods include a homogeneous method using a solution of solid electrolyte raw materials and a heterogeneous method using a suspension (slurry) in which solid electrolyte raw materials are not completely dissolved but solid and liquid coexist.

In a liquid-phase method, for example, a complexing agent solution (or slurry) of solid electrolyte raw materials is prepared, the solution is dried to give a complex crystal, and then, the resulting complex crystal is fired to give a solid electrolyte of a different crystal (see PTL 3). PTL 4 discloses a method for producing a sulfide solid electrolyte in which a raw material-containing solution containing raw materials and a solvent is supplied to another medium kept at a higher temperature than that of the solvent to volatilize the solvent and to allow the raw materials to react, thus precipitating an argyrodite-type crystal structure.

Citation List

Patent Literature

PTL 1: JP 2019-145489 A

PTL 2: JP 2013-201110 A

PTL 3: WO 2018/054709

PTL 4: WO 2019-169459

Summary of Invention

Technical Problem

The present invention has been made in consideration of the situation as above, and has an object to provide a method for producing a sulfide solid electrolyte having an argyrodite-type crystal structure, the method enabling easy production of a high-quality sulfide solid electrolyte without using an elemental halogen which complicates the handling or a lithium halide which has a considerably high hygroscopicity.

Solution to Problem

The modified sulfide solid electrolyte according to the present invention is a method for producing a sulfide solid electrolyte having an argyrodite-type crystal structure, the method including

mixing lithium sulfide, a phosphorus sulfide, and an ammonium halide to produce a solid electrolyte precursor, and firing the solid electrolyte precursor.

Advantageous Effects of Invention

According to the present invention, it is possible to provide a method for producing a sulfide solid electrolyte having an argyrodite-type crystal structure, the method enabling easy production of a high-quality sulfide solid electrolyte without using an elemental halogen which complicates the handling or a lithium halide which has a considerably high hygroscopicity.

Brief Description of Drawings

Fig. 1 shows an X-ray diffraction spectrum of a sulfide solid electrolyte obtained in Example 1.
Fig. 2 shows an X-ray diffraction spectrum of a sulfide solid electrolyte obtained in Comparative Example 1.

Description of Embodiments

An embodiment of the present invention (hereinafter sometimes referred to as "this embodiment") will be described below. In this description, numerical values as an upper limit and a lower limit in numerical value ranges of "or more", "or less", and "XX to YY" are numerical values which can be arbitrarily combined, and numerical values in the section of Examples can also be used as numerical values of an upper limit and a lower limit.

(Findings that the inventor has acquired to reach the present invention)

As a result of intensive and extensive studies for solving the above problem, the present inventor has found the following items, thus completing the present invention.
In the production method described in PTL 1, an elemental halogen which complicates the handling is to be used.
In the production method using a lithium halide as a raw material described in PTL 2, the moisture is to be removed from the lithium halide since the ionic conductivity of the sulfide solid electrolyte is possibly decreased when the lithium halide contains moisture. However, once the lithium halide forms a hydrate, it has been not easy to remove the moisture from the hydrate.
Thus, the present inventor has found that, by using an ammonium halide as a raw material that acts as a source of a halogen atom (hereinafter sometimes referred to as "halogen source") to be used in producing a sulfide solid electrolyte, a sulfide solid electrolyte can be produced without using a carrier halogen or a lithium halide.
In this description, the "solid electrolyte" means an electrolyte that maintains a solid form at 25°C under a nitrogen atmosphere. The "sulfide solid electrolyte" in this embodiment is a solid electrolyte that contains a lithium atom, a sulfur atom, a phosphorus atom, and at least one halogen atom selected from a chlorine atom and a bromine atom and that has an ionic conductivity attributable to the lithium atom.
The "sulfide solid electrolyte" includes both a crystalline sulfide solid electrolyte having a crystal structure and an amorphous sulfide solid electrolyte. In this description, the crystalline sulfide solid electrolyte is a solid electrolyte in which peaks derived from a solid electrolyte are observed in an X-ray diffraction pattern of a powdery X-ray diffraction (XRD) measurement, regardless of the presence or absence of a peak derived from a raw material of the solid electrolyte therein. In other words, the crystalline sulfide solid electrolyte contains a crystal structure derived from a solid electrolyte regardless of whether a part thereof is the crystal structure derived from a solid electrolyte or all thereof is the crystal structure derived from a solid electrolyte. In addition, the crystalline sulfide solid electrolyte may partially contain an amorphous sulfide solid electrolyte (also referred to as "glass component") as long as it has such an X-ray diffraction pattern as described above. Accordingly, the crystalline sulfide solid electrolyte encompasses a so-called glass ceramic which is obtained by heating an amorphous solid electrolyte (glass component) to a crystallization temperature or higher.
In addition, in this description, the amorphous sulfide solid electrolyte (glass component) means a sulfide solid electrolyte that gives, in a powdery X-ray diffraction (XRD) measurement, an X-ray diffraction pattern of a halo pattern in which substantially no peak other than peaks derived from the materials is observed, regardless of the presence or absence of a peak derived from a raw material of the solid electrolyte.
The distinguishment of crystalline or amorphous applies to any of a sulfide solid electrolyte and a modified sulfide solid electrolyte in this embodiment.
A method for producing a sulfide solid electrolyte according to a first aspect of this embodiment is a method for producing a sulfide solid electrolyte having an argyrodite-type crystal structure, the method including

mixing lithium sulfide, a phosphorus sulfide, and an ammonium halide to produce a solid electrolyte precursor, and firing the solid electrolyte precursor.

As described above, in the methods for producing a sulfide solid electrolyte described in PTLs 1 and 2, since an elemental halogen which complicates the handling or a lithium halide which has a considerably high hygroscopicity to form a hydrate is used as a raw material, there is a problem of decreasing the production efficiency.

In contrast, in the method for producing a sulfide solid electrolyte according to the first aspect, by using an ammonium halide as a halogen source, the problem attributable to the elemental halogen or lithium halide can be eliminated.

A method for producing a sulfide solid electrolyte according to a second aspect of this embodiment is the method for producing a sulfide solid electrolyte having an argyrodite-type crystal structure according to the first aspect, in which an alcohol solvent and a non-alcohol solvent are further mixed in addition to the lithium sulfide, the phosphorus sulfide, and the ammonium halide to prepare a solution containing the solid electrolyte precursor.

As a method for producing a solid electrolyte as a liquid phase method, as described in PTLs 3 and 4, studies of sulfide solid electrolytes having various compositions have proceeded. In recent years, sulfide solid electrolytes have spread, for example, application thereof in vehicles has studied, and thus, there has been a growing need for sulfide solid electrolytes having higher quality. Thus, in addition to a need for an enhancement in the quality of the sulfide solid electrolyte which has been heretofore studied, there is an increasing need for a method for more easily producing such a high-quality sulfide solid electrolyte.

In the production method (liquid phase method) described in PTL 3, two or more raw materials are used, and thus, it has been difficult to achieve the synthesis without causing separation of the raw materials in the complexing agent solution or slurry. Hence, a part of the raw materials does not contribute to a reaction, thereby reducing the ionic conductivity of the solid electrolyte in some cases.

The production method described in PTL 4 is also according to a liquid phase method, and ethanol is supposed as one of solvents used for preparation of a raw material-containing substance. An alcohol solvent, such as ethanol, has disadvantages while having the advantage that a reaction of raw materials easily proceeds.

For example, the following fact has been found: a part of a raw material does not contribute to production of the solid electrolyte, and thus, the production efficiency may decrease. Regarding lithium sulfide ($Li_2S$) which is generally used as a raw material of a solid electrolyte, a part thereof reacts with an alcohol solvent, such as ethanol, to produce a lithium alkoxide, such as lithium ethoxide, and does not contribute to a reaction with a raw material, such as a phosphorus sulfide (for example, diphosphorus pentasulfide ($P_2S_5$)) which is generally used together with lithium sulfide ($Li_2S$), and in addition to that, is likely to remain as an impurity, which causes a decrease in the purity of the sulfide solid electrolyte, resulting in deterioration in the quality, for example, a decrease in the ionic conductivity. In addition, a phosphorus sulfide (for example, diphosphorus pentasulfide ($P_2S_5$)), which dissolves in an alcohol solvent, such as ethanol, hardly contributes to a reaction with another raw material, such as lithium sulfide ($Li_2S$), once dissolves.

As described above, when an alcohol solvent is used, since a part of a raw material does not contribute to a reaction, it has been difficult to achieve a superior production efficiency. The production method described in PTL 4 has the disadvantage that the raw materials to be used are restricted for enhancing the production efficiency, like in the case where $Li_3PS_4$ is to be used as a raw material when using ethanol.

Although use of other solvents is also examined in PTL 4, various operations are needed in producing a raw material-containing substance. For example, when using tetrahydrofuran, elemental sulfur is to be used as a dissolution aid, and when using dehydrated pyridine, heat is to be applied for allowing the reaction to proceed, dehydrated pyridine is to be further added for adjusting the viscosity, and furthermore, hydrogen sulfide is to be blown.

The production methods by a liquid phase method described in PTLs 3 and 4 are said to be a production method superior in the efficiency in that a solid electrolyte can be produced by supplying a raw material-containing liquid to a medium. However, a part of a raw material is lost depending on the solvent used, resulting in a reduction in the production efficiency, or raw materials are restricted depending on the solvent used, or the required operation depends on the solvent used, resulting in cumbersome operation. Thus, in a method for producing a solid electrolyte by allowing raw materials to react in a liquid phase containing ethanol or other solvents, there is a room for further improvement in points of production efficiency, versatility, and the like.

As described above, in a production method of a solid electrolyte by a liquid phase method, the fact that a part of a raw material does not contribute to a reaction due to separation or loss thereof has been a factor that causes a problem in that the production efficiency is reduced or a high-quality solid electrolyte cannot be obtained. As a result of further study about this problem, it has been found that halogen atom-containing raw materials used for production of a solid electrolyte or the like having an argyrodite-type crystal structure, for example, lithium halides, such as lithium bromide, lithium iodide, and lithium chloride, are likely to cause such separation and loss as described above.

Thus, in the study about a solvent used in a production method of a solid electrolyte by a liquid phase method, the present inventor has focused on the affinity for raw materials used for producing a solid electrolyte, and has studied on whether separation and loss of a part of the raw materials can be suppressed.

Then, the present inventor has found that, by using an ammonium halide as a raw material of a solid electrolyte and separately using an alcohol solvent and a non-alcohol solvent in an appropriate manner, a high-quality solid electrolyte can be obtained while eliminating the problem in use of a liquid phase method, that is, the problem in that a part of a raw material is separated and lost so as not to contribute to the reaction, resulting in a reduction in the production efficiency.

As described above, conventional methods for producing a solid electrolyte described in PTLs 3 and 4 have a problem in that a part of a raw material used does not contribute to a reaction due to separation and loss thereof, resulting in a reduction in the production efficiency.

According to the method for producing a sulfide solid electrolyte of the second aspect, firstly, an ammonium halide is used as a halogen source in place of a lithium halide which has been conventionally used. Thus, the most part of lithium sulfide used as a raw material is consumed in a reaction with a phosphorus sulfide or an ammonium halide, and therefore, separation or loss of the raw materials hardly occur.

The solid electrolyte precursor contains a reaction product in which raw materials form a bonding state with each other and raw materials themselves, and by firing the solid electrolyte precursor, a sulfide solid electrolyte having an argyrodite-type crystal structure is produced. Thus, it is considered that the solid electrolyte precursor has a structure that is liable to form an argyrodite-type crystal structure.

The method for producing a sulfide solid electrolyte according to this embodiment further includes firing the solid electrolyte precursor.

As described above, by using an ammonium halide as a raw material, since the most part of the lithium sulfide used as a raw material is consumed in a reaction with a phosphorus sulfide or an ammonium halide, it is possible to reduce separation and loss of raw materials as compared with the conventional production method, but the raw materials are partially present as they are in some cases. For example, the lithium sulfide ($Li_2S$), when present as it is, produces a lithium alkoxide as described above, and thus, does not contribute to a reaction with another raw material. Then, when the lithium alkoxide remains as it is, the purity of the sulfide solid electrolyte decreases, and in addition, the lithium alkoxide is sometimes carbonized by firing and remains, resulting in deterioration in the quality, for example, reduction in the ionic conductivity. However, in the method for producing a sulfide solid electrolyte according to the first aspect, it is considered that ammonium sulfide is produced by a reaction of an ammonium halide and lithium sulfide, and the ammonium sulfide decomposes in firing to generate hydrogen sulfide, but at least a part of the lithium alkoxide is converted back to lithium sulfide by a reaction with hydrogen sulfide. Specifically, it is considered that reactions according to the following reaction formulae (1) to (3) occur.

$$Li_2S + EtOH \rightarrow EtOLi + LiSH \qquad (1)$$

$$2LiSH \rightarrow Li_2S + H_2S \qquad (2)$$

$$Li_2S + 2NH_4Cl \rightarrow (NH_4)_2S + 2LiCl \qquad (3)$$

$$(NH_4)_2S \rightarrow 2NH_3 + H_2S \qquad (4)$$

$$2EtOLi + H_2S \rightarrow Li_2S + 2EtOH \qquad (5)$$

The above reactions are provided on the assumption that lithium sulfide ($Li_2S$) is used as a raw material and ammonium chloride ($NH_4Cl$) is used as an ammonium halide. When lithium sulfide ($Li_2S$) is present as it is, the lithium sulfide reacts with ethanol to produce lithium ethoxide (EtOLi) and lithium hydrogen sulfide (LiSH) as represented by the reaction formula (1). The lithium hydrogen sulfide (LiSH) decomposes to produce lithium sulfide ($Li_2S$) and hydrogen sulfide as represented by reaction formula (2). The lithium sulfide ($Li_2S$) reacts with ammonium chloride ($NH_4Cl$) to produce ammonium sulfide (($NH_4)_2S$) and lithium chloride (LiCl). Furthermore, the ammonium sulfide (($NH_4)_2S$) produced in the reaction formula (3) decomposes to generate ammonia ($NH_3$) and hydrogen sulfide as represented by the reaction formula (4). Then, the lithium ethoxide (EtOLi) produced in the reaction formula (1) reacts with the hydrogen sulfide produced in the reaction formulae (2) and (4) to produce lithium sulfide ($Li_2S$) as represented by the reaction formula (5). The lithium sulfide ($Li_2S$) produced in the reaction formula (5) reacts with another raw material to form a sulfide solid electrolyte in some cases, or if remains as it is, it does not cause a reduction in the ionic conductivity of the sulfide solid electrolyte. Thus, by performing firing while generating hydrogen sulfide, it is possible to suppress loss of raw materials and to enhance the quality of the sulfide solid electrolyte.

Since an argyrodite-type crystal structure is formed and the crystallinity thereof is enhanced by firing the solid electrolyte precursor, a high-quality sulfide solid electrolyte having an argyrodite-type crystal structure is obtained.

As described above, by using an ammonium halide as a raw material and performing firing while generating hydrogen sulfide, the problem in that a part of a raw material is separated and lost so as not to contribute to a reaction, resulting in a reduction in the production efficiency can be eliminated, and it is possible to easily produce a high-quality sulfide solid electrolyte containing reduced impurities and having a high ionic conductivity.

A method for producing a sulfide solid electrolyte according to a third aspect of this embodiment is the method for producing a sulfide solid electrolyte having an argyrodite-type crystal structure according to the second aspect, in which the method includes

a step 1-1 of mixing lithium sulfide, the phosphorus sulfide, and the non-alcohol solvent to prepare a fluid 1-1,
a step 1-2 of mixing lithium sulfide, the ammonium halide, and the alcohol solvent to prepare a fluid 1-2, and
a step 1-3 of mixing the fluid 1-1 and the fluid 1-2 to prepare a solution containing the solid electrolyte precursor.

By allowing lithium sulfide and the phosphorus sulfide to react under the non-alcohol solvent in the step 1-1, production of a lithium alkoxide can be suppressed, and thus, separation and loss of a raw material hardly occur to more efficiently produce the solid electrolyte precursor. As a result, it is possible to enhance the production efficiency and easily produce a high-quality sulfide solid electrolyte.

By allowing lithium sulfide and the lithium halide to react in the presence of the alcohol solvent in the step 1-2, the reaction is promoted.

A method for producing a sulfide solid electrolyte according to a fourth aspect of this embodiment is the method for producing a sulfide solid electrolyte having an argyrodite-type crystal structure according to the third aspect, in which the lithium sulfide, the phosphorus sulfide, and the non-alcohol solvent are mixed by using a mixer or a stirrer in the step 1-1.

A method for producing a sulfide solid electrolyte according to a fifth aspect of this embodiment is the method for producing a sulfide solid electrolyte having an argyrodite-type crystal structure according to the third or fourth aspect, in which

the lithium sulfide, the ammonium halide, and the alcohol solvent are mixed by using a mixer or a stirrer in the step 1-2.

Since the mixing of the lithium sulfide, phosphorus sulfide, and non-alcohol solvent in the step 1-1 and the mixing of the lithium sulfide, ammonium halide, and alcohol solvent in the step 1-2 can be achieved simply by using a mixer or a stirrer, in other words, can be simply achieved without an apparatus that takes a large energy, such as a pulverizer, this method is said to be a production method superior in the production efficiency.

A method for producing a sulfide solid electrolyte according to a sixth aspect of this embodiment is the method for producing a sulfide solid electrolyte having an argyrodite-type crystal structure according to any one of the third to fifth aspects, in which

the non-alcohol solvent is used in the step 1-1 in an amount of 100 mL or more and 1000 mL or less relative to 100 g of the total amount of the lithium sulfide and the phosphorus sulfide in the step 1-1.

When the amount of the non-alcohol solvent used in the step 1-1 is within the above range, the lithium sulfide and the phosphorus sulfide can be more efficiently reacted.

A method for producing a sulfide solid electrolyte according to a seventh aspect of this embodiment is the method for producing a sulfide solid electrolyte having an argyrodite-type crystal structure according to any one of the third to sixth aspects, in which

the alcohol solvent is used in the step 1-2 in an amount of 200 mL or more and 3000 mL or less relative to 100 g of the total amount of the lithium sulfide and the ammonium halide in the step 1-2.

When the amount of the alcohol solvent used in the step 1-2 is within the above range, the lithium sulfide and the ammonium halide can be more efficiently reacted.

A method for producing a sulfide solid electrolyte according to an eighth aspect of this embodiment is the method for producing a sulfide solid electrolyte having an argyrodite-type crystal structure according to the second aspect, in which the method includes

a step 2-1 of mixing lithium sulfide, the phosphorus sulfide, the ammonium halide, and the non-alcohol solvent to prepare a fluid 2-1, and
a step 2-2 of mixing the alcohol solvent with the fluid 2-1 to prepare the solution containing the solid electrolyte precursor.

By allowing lithium sulfide, the phosphorus sulfide, and the ammonium halide to react under the non-alcohol solvent in the step 2-1, production of a lithium alkoxide can be suppressed, and thus, separation and loss of a raw material hardly occur to more efficiently produce a solid electrolyte precursor. As a result, it is possible to enhance the production efficiency and easily produce a high-quality sulfide solid electrolyte.

By mixing the alcohol solvent with the fluid obtained in the step 2-1 (fluid 2-1) in the step 2-2, the reaction of the remaining unreacted raw materials is promoted.

A method for producing a sulfide solid electrolyte according to a nineth aspect of this embodiment is the method for producing a sulfide solid electrolyte having an argyrodite-type crystal structure according to the eighth aspect, in which in the step 2-1, the lithium sulfide, the phosphorus sulfide, the ammonium halide, and the non-alcohol solvent are mixed by using a mixer or a stirrer.

Since the mixing of the lithium sulfide, phosphorus sulfide, ammonium halide, and non-alcohol solvent in the step 2-1 can be achieved simply by using a mixer and a stirrer, in other words, can be simply achieved without an apparatus that takes a large energy, such as a pulverizer, this method is said to be a production method superior in the production efficiency.

A method for producing a sulfide solid electrolyte according to a tenth aspect of this embodiment is the method for producing a sulfide solid electrolyte having an argyrodite-type crystal structure according to the eighth or nineth aspect, in which

the non-alcohol solvent is used in the step 2-1 in an amount of 100 mL or more and 1000 mL or less relative to 100 g of the total amount of the lithium sulfide, the phosphorus sulfide, and the ammonium halide in the step 2-1.

When the amount of the non-alcohol solvent used in the step 2-1 is within the above range, the lithium sulfide, phosphorus sulfide, and ammonium halide can be more efficiently reacted.

A method for producing a sulfide solid electrolyte according to an eleventh aspect of this embodiment is the method for producing a sulfide solid electrolyte having an argyrodite-type crystal structure according to any one of the eighth to tenth aspects, in which

the alcohol solvent is used in the step 2-2 in an amount of 1000 mL or more and 3000 mL or less relative to 100 g of the total amount of the lithium sulfide, the phosphorus sulfide, and the ammonium halide in the step 2-1.

When the amount of the alcohol solvent used in the step 2-2 is within the above range, the lithium sulfide, phosphorus sulfide, and ammonium halide can be more efficiently reacted.

A method for producing a sulfide solid electrolyte according to a twelfth of this embodiment is the method for producing a sulfide solid electrolyte having an argyrodite-type crystal structure according to any one of the second to eleventh aspects, in which

the non-alcohol solvent is at least one selected from an ester solvent, an ether solvent, an aldehyde solvent, a ketone solvent, an amine solvent, an amide solvent, a nitro solvent, and a nitrile solvent.

When the non-alcohol solvent is a solvent as describe above, it is possible to enhance the production efficiency and easily produce a high-quality sulfide solid electrolyte.

A method for producing a sulfide solid electrolyte according to a thirteenth aspect of this embodiment is the method for producing a sulfide solid electrolyte having an argyrodite-type crystal structure according to any one of the first to twelfth aspects, in which

the firing is performed at 200°C or higher.

When the temperature in firing is 200°C or higher, the lithium alkoxide is more efficiently converted to $Li_2S$ to suppress deterioration in the quality, such as a reduction in the ionic conductivity, caused by the lithium alkoxide contained, and a sulfide solid electrolyte having an argyrodite-type crystal structure is liable to be obtained. Thus, it is possible to enhance the production efficiency and easily produce a high-quality sulfide solid electrolyte.

The method for producing a sulfide solid electrolyte of this embodiment will be described in more detail below along the above aspects.

[Method for producing a sulfide solid electrolyte]

The method for producing a sulfide solid electrolyte of this embodiment is a method for producing a sulfide solid electrolyte having an argyrodite-type crystal structure, including

mixing lithium sulfide, a phosphorus sulfide, and an ammonium halide to produce a solid electrolyte precursor, and firing the solid electrolyte precursor.

In the method for producing a sulfide solid electrolyte of this embodiment, a solid electrolyte precursor may be produced by mixing lithium sulfide, a phosphorus sulfide, and an ammonium halide in a solid phase, but it is preferred that, in addition to the lithium sulfide, phosphorus sulfide, and ammonium halide, an alcohol solvent and a non-alcohol solvent are further mixed to prepare a solution containing the solid electrolyte precursor.

(Solid electrolyte raw material)

As solid electrolyte raw materials used in the production method of this embodiment, at least lithium sulfide, a phosphorus sulfide, and an ammonium halide are used. As a halogen atom, a chlorine atom, a bromine atom, or an iodine atom is preferred, and a chlorine atom or a bromine atom is more preferred. At least two kinds of halogen atoms are preferably contained.

**EP 4 462 452 A1**

Specific examples of raw materials used in the production method of this embodiment include lithium sulfide; phosphorus sulfides, such as diphosphorus trisulfide ($P_2S_3$) and diphosphorus pentasulfide ($P_2S_5$); ammonium halides, such as ammonium fluoride, ammonium chloride, ammonium bromide, and ammonium iodide; lithium halides, such as lithium fluoride, lithium chloride, lithium bromide, and lithium iodide; phosphorus halides, such as various phosphorus fluorides ($PF_3$, $PF_5$), various phosphorus chlorides ($PCl_3$, $PCl_5$, $P_2Cl_4$), various phosphorus bromides ($PBr_3$, PBrs), and various phosphorus iodides ($PI_3$, $P_2I_4$); thiophosphoryl halides, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichloride fluoride ($PSCl_2F$), and thiophosphoryl dibromide fluoride ($PSBr_2F$); and elemental halogens, such as fluorine ($F_2$), chlorine ($Cl_2$), bromine ($Br_2$), and iodine ($I_2$).

Examples of materials that can be used as a raw material other than the above include a raw material that contains at least one atom selected from an alkali metal, a sulfur atom, a phosphorus atom, and a halogen atom, and contains an atom other than the atoms, more specifically, lithium compounds, such as lithium oxide, lithium hydroxide, and lithium carbonate; alkali metal sulfides, such as sodium sulfide, potassium sulfide, rubidium sulfide, and cesium sulfide; metal sulfides, such as silicon sulfide, germanium sulfide, boron sulfide, gallium sulfide, tin sulfides ($SnS$, $SnS_2$), aluminum sulfide, and zinc sulfide; phosphate compounds, such as sodium phosphate and lithium phosphate; halides of alkali metals other than lithium, for example, sodium halides, such as sodium iodide, sodium fluoride, sodium chloride, and sodium bromide; metal halides, such as an aluminum halide, a silicon halide, a germanium halide, an arsenic halide, a selenium halide, a tin halide, an antimony halide, a tellurium halide, and a bismuth halide; phosphorus oxyhalides, such as phosphorus oxychloride ($POCl_3$) and phosphorus oxybromide ($POBr_3$).

In this embodiment, from the viewpoint of more easily obtaining a sulfide solid electrolyte having a high ionic conductivity, among alkali metal atoms, a lithium atom and a sodium atom are preferred, a lithium atom is more preferred, and among halogen atoms, a chlorine atom, a bromine atom, and an iodine atom are preferred, a chlorine atom is more preferred. One of the atoms may be used alone or two or more thereof may be used in combination.

Examples of the ammonium halide include ammonium fluoride, ammonium chloride, ammonium bromide, and ammonium iodide as described above. One selected from them can be used or two or more thereof can be used in combination.

As a solid electrolyte raw material used in this embodiment, one of the compounds mentioned above can be used alone or two or more thereof can be used in combination.

In this embodiment, a solid electrolyte containing a $PS_4$ structure or the like, such as $Li_3PS_4$, can be used as a raw material. By using a solid electrolyte, such as $Li_3PS_4$, as a raw material, the separation and loss of lithium sulfide ($Li_2S$), a phosphorus sulfide (for example, diphosphorus pentasulfide ($P_2S_5$)), and the like as described above can be suppressed, and since a reaction product, such as $Li_3PS_4$, can form a basic structure of a sulfide solid electrolyte, a sulfide solid electrolyte having an argyrodite-type crystal structure is liable to be obtained.

On the other hand, a solid electrolyte, such as $Li_3PS_4$, is to be produced by a conventionally present production method, such as a mechanical milling method, a slurry method, or a melt-quenching method, using lithium sulfide ($Li_2S$) and a phosphorus sulfide (for example, diphosphorus pentasulfide ($P_2S_5$)). Thus, the production efficiency of the production method of this embodiment is reduced in some cases. In the production method of this embodiment, as described above, separation and loss of a raw material is suppressed by using an ammonium halide as a raw material. In view of this fact, use of a reaction product, such as $Li_3PS_4$, as a raw material is not so highly required in the production method of this embodiment.

When lithium sulfide is used as a compound containing an alkali metal in this embodiment, the lithium sulfide is preferably particulate.

The average particle diameter ($D_{50}$) of the lithium sulfide particles is preferably 10 $\mu$m or more and 2000 $\mu$m or less, more preferably 30 $\mu$m or more and 1500 $\mu$m or less, and further preferably 50 $\mu$m or more and 1000 $\mu$m or less. In this description, the average particle diameter ($D_{50}$) is a particle diameter at which the integrated value from the side of the lowest particle diameter in a particle diameter distribution cumulative curve reaches 50% of the total integrated value, and the volume distribution is an average particle diameter that can be measured with, for example, a laser diffraction / scattering particle diameter distribution measurement apparatus. Among the raw materials mentioned above, solid raw materials preferably have an average particle diameter of the same degree as that of the lithium sulfide particles, that is, preferably have an average particle diameter within the same range as that for the lithium sulfide particles.

(Blending ratio of raw materials)

The amount of lithium sulfide used based on the total amount of the lithium sulfide and phosphorus sulfide is preferably 70% by mole or more, more preferably 76% by mole or more, further preferably 82% by mole or more, and the upper limit is preferably 92% by mole or less, more preferably 88% by mole or less, further preferably 86% by mole or less.

When the amount of lithium sulfide used is within the above range, a sulfide solid electrolyte having an argyrodite-type crystal structure is liable to be obtained.

8

When lithium sulfide, diphosphorus pentasulfide, an ammonium halide, and another raw material which is used as needed are used, the content of lithium sulfide and diphosphorus pentasulfide based on the total thereof is preferably 55% by mole or more, more preferably 65% by mole or more, further preferably 63% by mole or more, and the upper limit is preferably 85% by mole or less, more preferably 75% by mole or less, further preferably 70% by mole or less.

When the content of lithium sulfide and diphosphorus pentasulfide is within the above range, a sulfide solid electrolyte having an argyrodite-type crystal structure is liable to be obtained.

When ammonium chloride and ammonium bromide are used in combination as the ammonium halide, the proportion of ammonium chloride based on the total of ammonium chloride and ammonium bromide is preferably 1% by mole or more, more preferably 20% by mole or more, further preferably 40% by mole or more, furthermore preferably 55% by mole or more, and the upper limit is preferably 99% by mole or less, more preferably 90% by mole or less, further preferably 80% by mole or less, furthermore preferably 75% by mole or less.

When the proportion of ammonium chloride is within the above range, a sulfide solid electrolyte having an argyrodite-type crystal structure is liable to be obtained.

(Alcohol solvent)

Examples of the alcohol solvent include primary and secondary aliphatic alcohols, such as methanol, ethanol, isopropanol, butanol, and 2-ethylhexyl alcohol; polyhydric alcohols, such as ethylene glycol, propylene glycol, butanediol, and hexanediol; alicyclic alcohols, such as cyclopentanol, cyclohexanol, and cyclopentylmethanol; aromatic alcohols, such as butylphenol, benzyl alcohol, phenethyl alcohol, naphthol, and diphenylmethanol; and alkoxy alcohols, such as methoxyethanol, propoxyethanol, and butoxyethanol.

As the alcohol solvent, among the above various solvents, an aliphatic alcohol is preferred, a primary aliphatic alcohol is more preferred, methanol and ethanol are further preferred, and ethanol is particularly preferred.

(Non-alcohol solvent)

The non-alcohol solvent is a solvent different from the alcohol solvent, and is preferably a solvent containing at least one of an oxygen atom and a nitrogen atom. Specific examples of such non-alcohol solvents include at least one solvent containing an oxygen atom selected from an ether solvent, an ester solvent, an aldehyde solvent, and a ketone solvent; and at least one solvent containing a nitrogen atom selected from an amine solvent, an amide solvent, a nitro solvent, and a nitrile solvent.

Preferred examples of the solvent containing an oxygen atom include ether solvents, for example, aliphatic ethers, such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers, such as ethylene oxide, propylene oxide, tetrahydrofuran, tetrahydropyran, dimethoxytetrahydrofuran, cyclopentyl methyl ether, and dioxane; heterocyclic ethers, such as furan, benzofuran, and benzopyran; and aromatic ethers, such as methyl phenyl ether (anisole), ethyl phenyl ether, dibenzyl ether, and diphenyl ether.

Preferred examples of the ester solvent include aliphatic esters, such as methyl formate, ethyl formate, methyl acetate, ethyl acetate, propyl acetate, isopropyl acetate; methyl propionate, ethyl propionate, dimethyl oxalate, diethyl oxalate, dimethyl malonate, diethyl malonate, dimethyl succinate, and diethyl succinate; alicyclic esters, such as methyl cyclohexanecarboxylate, ethyl cyclohexanecarboxylate, and dimethyl cyclohexanedicarboxylate; heterocyclic esters, such as methyl pyridinecarboxylate, methyl pyrimidinecarboxylate, acetolactone, propiolactone, butyrolactone, and valerolactone; and aromatic esters, such as methyl benzoate, ethyl benzoate, dimethyl phthalate, diethyl phthalate, benzyl butyl phthalate, dicyclohexyl phthalate, trimethyl trimellitate, and triethyl trimellitate.

Preferred examples of the aldehyde solvent include formaldehyde, acetaldehyde, and dimethylformamide, and preferred examples of the ketone solvent include acetone and methyl ethyl ketone.

Examples of the solvent containing a nitrogen atom include solvents having a group containing a nitrogen atom, such as an amino group, an amide group, a nitro group, or a nitrile group, that is, an amine solvent, an amide solvent, a nitro solvent, and a nitrile solvent.

Preferred examples of the amine solvent include aliphatic amines, such as ethylenediamine, diaminopropane, dimethylethylenediamine, diethylethylenediamine, dimethyldiaminopropane, tetramethyldiaminomethane, tetramethylethylenediamine (TMEDA), and tetramethyldiaminopropane (TMPDA); alicyclic amines, such as cyclopropanediamine, cyclohexanediamine, and bisaminomethylcyclohexane; heterocyclic amines, such as isophorone diamine, piperazine, dipiperidylpropane, and dimethylpiperazine; and aromatic amines, such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Preferred examples of the amide solvent include dimethylformamide, diethylformamide, dimethylacetamide, methoxydimethylpropanamide, hexamethylphosphoric triamide, hexamethylphosphorous triamide, and N-methylpyrrolidone.

An example of the nitro solvent is a nitrobenzene. Preferred examples of the nitrile solvent include acetonitrile, methoxyacetonitrile, acrylonitrile, propionitrile, isobutyronitrile, methoxypropionitrile, and benzonitrile.

As the non-alcohol solvent, among the above various solvents, an ether solvent, an ester solvent, and an amine solvent are preferred, and an ether solvent is more preferred. Among the ether solvents, an alicyclic ether is preferred, and tetrahydrofuran is particularly preferred.

(Other solvent)

In the production method of this embodiment, other solvents than the alcohol solvent and non-alcohol solvent can also be used. Examples of the other solvents include solvents not having a heteroatom, such as an oxygen atom and a nitrogen atom.

Examples of such solvents include hydrocarbon solvents, such as an aliphatic hydrocarbon solvent, an alicyclic hydrocarbon solvent, and an aromatic hydrocarbon solvent.

Examples of the aliphatic hydrocarbon include hexane, pentane, 2-ethylhexane, heptane, octane, decane, undecane, dodecane, and tridecane. Examples of the alicyclic hydrocarbon include cyclohexane and methylcyclohexane. Examples of the aromatic hydrocarbon solvent include benzene, toluene, xylene, mesitylene, ethylbenzene, and tert-butylbenzene.

When the other solvents are used, the solvent may be used in combination with the alcohol solvent or may be used in combination with the non-alcohol solvent.

The amount of the other solvents used is not particularly limited.

(Preparing a solution)

In the production method of this embodiment, a solution containing a solid electrolyte precursor is obtained by mixing the lithium sulfide, diphosphorus pentasulfide, ammonium halide, alcohol solvent, and non-alcohol solvent described above.

The solution containing the solid electrolyte precursor contains the alcohol solvent, the non-alcohol solvent, the solid electrolyte precursor, and is present in the state where the solid electrolyte precursor is dissolved.

In the production method of this embodiment, specific examples of the method for preparing the solution containing the solid electrolyte precursor include two aspects 1 and 2 described below.

The aspect 1 of this embodiment includes

a step 1-1 of mixing lithium sulfide, the phosphorus sulfide, and the non-alcohol solvent to prepare a fluid 1-1,
a step 1-2 of mixing lithium sulfide, the ammonium halide, and the alcohol solvent to prepare a fluid 1-2, and
a step 1-3 of mixing the fluid 1-1 and the fluid 1-2 to prepare the solution containing the solid electrolyte precursor.

The aspect 2 of this embodiment includes

a step 2-1 of mixing lithium sulfide, the phosphorus sulfide, the ammonium halide, and the non-alcohol solvent to prepare a fluid 2-1, and
a step 2-2 of mixing the alcohol solvent with the fluid 2-1 to prepare the solution containing the solid electrolyte precursor.

The mixing in the step 1-1 and the step 2-1 can be performed by using, for example, a mixer or a stirrer. Note that, when a pulverizer is used, pulverization of raw materials occurs, and mixing occurs at the same time. A method in which mixing with pulverization is performed is a method which has been conventionally employed as a mechanical milling method (solid phase method). Since a reaction is allowed to proceed in a solvent (liquid phase) in the production method of this embodiment, use of a pulverizer is not preferred.

Accordingly, in the production method of this embodiment, mixing of the lithium sulfide, phosphorus sulfide, and non-alcohol solvent is preferably performed with an apparatus referred to as a mixer or a stirrer. In other words, the mixing can be performed by a treatment of stirring, mixing, or a combination of either thereof.

An example of the stirrer and mixer is a mechanically stirring-style mixer in which a stirring blade is provided in a mixing tank for stirring (mixing by stirring, which can be also referred to as stirring-mixing). Examples of the mechanically stirring-style mixer include a high-speed stirring-type mixer and a double arm-type mixer. Examples of the high-speed stirring-type mixer include a vertical axis rotation-type mixer and a horizontal axis rotation-type mixer, and a mixer of either type may be used.

Examples of the shape of the stirring blade used in the mechanically stirring-style mixer include a blade shape, an arm shape, an anchor shape, a paddle shape, a full-zone shape, a ribbon shape, a multistep blade shape, a double arm shape, a shovel shape, a twin-shaft blade shape, a flat blade shape, and a C-type blade shape. From the viewpoint of more efficiently promoting the reaction of the raw materials, a shovel shape, a flat blade shape, a C-type blade shape, an anchor shape, a paddle shape, and a full-zone shape are preferred, and an anchor shape, a paddle shape, and a full-zone shape are more preferred.

When a mechanically stirring-style mixer is used, the rotation number of the stirring blade can be appropriately controlled with no specific limitation depending on the volume and the temperature of the mixture in the mixing tank, the shape of the stirring blade, and the like, and can be generally approximately 5 rpm or more and 500 rpm or less. From the viewpoint of more efficiently preparing a solution, the rotation number is preferably 25 rpm or more, more preferably 50 rpm or more, further preferably 100 rpm or more, and the upper limit is preferably 450 rpm or less, more preferably 400 rpm or less, further preferably 350 rpm or less.

The temperature condition in mixing with a stirrer or a mixer is not particularly limited, and, for example, is generally -10 to 100°C, preferably 0 to 80°C, more preferably 10 to 70°C, and further preferably 20 to 60°C. The mixing time is generally 0.1 to 500 hours, and from the viewpoint of preparing a reaction product in a more efficient manner and in a larger amount, the mixing time is preferably 1 to 400 hours, more preferably 3 to 300 hours, further preferably 5 to 200 hours, and furthermore preferably 10 to 100 hours.

The mixing in the step 1-2, the step 1-3, and the step 2-2 can be performed in the same manner as for the mixing in the step 1-1 and step 2-1, for example, with a mixer or a stirrer. The mixer or stirrer that can be used in mixing in the step 1-2, the step 1-3, and the step 2-2 can be selected and adopted from those exemplified as a mixer or stirrer that can be used in the mixing in the step 1-1 and the step 2-1.

In the step 1-2, the temperature condition in mixing with a stirrer or a mixer is not particularly limited, and, for example, is generally -10 to 100°C, preferably 0 to 80°C, more preferably 10 to 70°C, and further preferably 20 to 60°C. The mixing time is generally 1 minute to 100 hours, and from the viewpoint of preparing a solid electrolyte precursor in a more efficient manner and in a larger amount, the mixing time is preferably 3 minutes to 80 hours, more preferably 5 minutes to 50 hours, further preferably 10 minutes to 10 hours, and furthermore preferably 20 minutes to 1 hour.

The amount of the non-alcohol solvent used in the step 1-1 relative to 100 g of the total amount of the lithium sulfide and diphosphorus pentasulfide in the step 1-1 is preferably 100 mL or more, more preferably 200 mL or more, further preferably 400 mL or more, furthermore preferably 600 mL or more, and the upper limit is preferably 2000 mL or less, more preferably 1500 mL or less, further preferably 1000 mL or less, furthermore preferably 900 mL or less.

The amount of the alcohol solvent used in the step 1-2 relative to 100 g of the raw materials is preferably 200 mL or more, more preferably 200 mL or more, further preferably 350 mL or more, furthermore preferably 450 mL or more, and the upper limit is preferably 3000 mL or less, more preferably 2500 mL or less, further preferably 2000 mL or less, furthermore preferably 1800 mL or less.

The amount of the non-alcohol solvent used in the step 2-1 relative to 100 g of the total amount of the lithium sulfide and diphosphorus pentasulfide in the step 2-1 is preferably 100 mL or more, more preferably 200 mL or more, further preferably 400 mL or more, furthermore preferably 600 mL or more, and the upper limit is preferably 1000 mL or less, more preferably 800 mL or less, further preferably 700 mL or less, furthermore preferably 600 mL or less.

The amount of the alcohol solvent used in the step 2-2 relative to 100 g of the raw materials is preferably 200 mL or more, more preferably 200 mL or more, further preferably 350 mL or more, furthermore preferably 450 mL or more, and the upper limit is preferably 3000 mL or less, more preferably 2500 mL or less, further preferably 2000 mL or less, furthermore preferably 1800 mL or less.

(Drying)

The solution containing the solid electrolyte precursor may be dried before firing described later. In other words, the production method of this embodiment may include drying the solution containing the solid electrolyte precursor.

When the solution is dried to volatilize the alcohol solvent and non-alcohol solvent contained in the solution, the reactions represented by the reaction formulae (4) and (5) are liable to proceed and the lithium alkoxide is liable to be converted to lithium sulfide. Then, deterioration in the quality, such as a reduction in the ionic conductivity, can be efficiently suppressed and a high-quality sulfide solid electrolyte is produced.

The drying can be performed at a temperature according to the type of the alcohol solvent and non-alcohol solvent used in the mixing. For example, the drying can be performed at a temperature equal to or higher than the boiling points of the alcohol solvent and non-alcohol solvent.

Regarding the drying conditions, the drying temperature cannot be unconditionally defined because it varies depending on the pressure condition in drying and the boiling points of the alcohol solvent and non-alcohol solvent, but is generally 5°C or higher and lower than 230°C, preferably 20°C to 220°C, more preferably 35 to 215°C, further preferably 50 to 210°C. The pressure condition can be a normal pressure or an increased pressure, but the drying is preferably performed under a reduced pressure with a vacuum pump or the like (vacuum drying). The drying time is generally 1 minute to 10 hours, preferably 10 minutes to 8 hours, more preferably 30 minutes to 6 hours, further preferably 1 hour to 5 hours.

(Firing)

The production method of this embodiment includes firing the solid electrolyte precursor. By firing, for example, an impurity, such as a lithium alkoxide, which is possibly produced as a reaction product of lithium sulfide and an alcohol solvent contained in the solution can be converted into lithium sulfide, and an argyrodite-type crystal structure is formed and the crystallinity thereof is enhanced. Accordingly, a high-quality sulfide solid electrolyte having an argyrodite-type crystal structure is obtained.

When drying as described above is not performed, the alcohol solvent and non-alcohol solvent contained in the solution can be removed.

The heating temperature by firing cannot be unconditionally defined because it varies depending on the kinds of the alcohol solvent and non-alcohol solvent, but is preferably 200°C or higher, more preferably 250°C or higher, further preferably 350°C or higher, furthermore preferably 400°C or higher, and the upper limit is preferably 700°C or lower, more preferably 600°C or lower, further preferably 500°C or lower, furthermore preferably 450°C or lower. The heating temperature means the highest temperature in firing.

The time for firing is generally 1 minute to 20 hours, preferably 10 minutes to 16 hours, more preferably 30 minutes to 12 hours, further preferably 1 hour to 10 hours. The time for firing means the time for holding the heating temperature by firing.

The firing may be performed while supplying an inert gas, such as nitrogen gas or argon gas.

The method of firing is not particularly limited, but examples thereof include methods using a vacuum heating apparatus or a firing furnace. Industrially, a horizontal dryer, a horizontal vibrating fluid dryer, or the like having a heating means and a feeding mechanism can be used. The method can be selected depending on the amount to be treated by heating.

(Sulfide solid electrolyte)

The sulfide solid electrolyte obtained by the above production method is a sulfide solid electrolyte having an argyrodite-type crystal structure.

The argyrodite-type crystal structure is a structure basically having an $Li_7PS_6$ structure backbone and obtained by replacing a part of P with Si. For example, the crystal structures represented by the compositional formulae $Li_{7-x}P_{1-y}Si_yS_6$ and $Li_{7+x}P_{1-y}Si_yS_6$ (x is -0.6 to 0.6, y is 0.1 to 0.6) are a cubic crystal or an orthorhombic crystal, preferably a cubic crystal, and give peaks appearing mainly at positions of $2\theta=15.5°$, 18.0°, 25.0°, 30.0°, 31.4°, 45.3°, 47.0°, and 52.0° in the X-ray diffractometry using a $CuK\alpha$ line.

The crystal structure represented by the compositional formula $Li_{7-x-2y}PS_{6-x-y}Cl_x$ ($0.8\leq x\leq1.7$, $0<y\leq-0.25x+0.5$) is preferably a cubic crystal, and gives peaks appearing mainly at positions of $2\theta=15.5°$, 18.0°, 25.0°, 30.0°, 31.4°, 45.3°, 47.0°, and 52.0° in the X-ray diffractometry using a $CuK\alpha$ line. The crystal structure represented by the compositional formula $Li_{7-x}PS_{6-x}Ha_x$ (Ha is Cl or Br, x is preferably 0.2 to 1.8) is preferably a cubic crystal, and gives peaks appearing mainly at positions of $2\theta=15.5°$, 18.0°, 25.0°, 30.0°, 31.4°, 45.3°, 47.0°, and 52.0° in the X-ray diffractometry using a $CuK\alpha$ line.

The positions of the peaks may vary within the range of $\pm0.5°$.

The shape of the sulfide solid electrolyte having an argyrodite-type crystal structure obtained by the production method of this embodiment is not particularly limited, and an example thereof is particulate. The average particle diameter ($D_{50}$) of the particulate crystalline sulfide solid electrolyte can be, for example, within the range of 0.01 $\mu$m to 500 $\mu$m or 0.1 to 200 $\mu$m.

(Application)

As described above, a sulfide solid electrolyte having an argyrodite-type crystal structure obtained by the method for producing a sulfide solid electrolyte of this embodiment is a high-quality sulfide solid electrolyte having a small amount of impurities and having a high ionic conductivity. Accordingly, the sulfide solid electrolyte has a superior battery performance, and thus, can be suitably used in a battery.

A sulfide solid electrolyte obtained by the method for producing a sulfide solid electrolyte of this embodiment may be used in a positive electrode layer or a negative electrode layer, or may be used in an electrolyte layer. The layers can be produced by a known method.

In the battery, besides a positive electrode layer, an electrolyte layer, and a negative electrode layer, a collector is preferably used, and as the collector, a known collector can be used. For example, a layer in which a substance that reacts with the solid electrolyte, such as Au, Pt, Al, Ti, or Cu, is coated with Au or the like can be used.

Examples

Next, the present invention will be specifically described with reference to examples. The present invention is in no way limited by the examples.

(Measurement of ionic conductivity)

In Examples herein, the ionic conductivity was measured as follows.

A powder of each sulfide solid electrolyte obtained in Examples and Comparative Example was molded into a circular palette having a diameter of 6 to 10 mm (sectional area S: 0.283 to 0.785 cm$^2$) and a height (L) of 0.1 to 0.3 cm to prepare a specimen. Electrode terminals were attached to the specimen from above and below, and measurement was performed by an alternating current impedance method at 25°C (frequency range: 1 MHz to 0.1 Hz, amplitude: 10 mV) to give a Cole-Cole plot. The real part Z' ($\Omega$) at the point at which - Z" ($\Omega$) became the minimum near the right end of an arc observed in a region on the high frequency side was designated as the bulk resistance R ($\Omega$) of the electrolyte, and the ionic conductivity $\sigma$ (S/cm) was calculated according to the following expressions.

$$R = \rho(L/S)$$

$$\sigma = 1/\rho$$

(Powdery X-ray diffractometry)

In Examples herein, the powdery X-ray diffractometry (XRD) was performed as follows.

Each powder obtained in Examples and Comparative Example was charged into a hole having a diameter of 20 mm and a depth of 0.2 mm and was floated with a glass to prepare a specimen. This specimen was subjected to measurement using an airtight sample stage sealed with a Kapton film without contact with air under the following conditions.

Measurement apparatus: MiniFlex, manufactured by Rigaku Corporation
Tube voltage: 40 kV
Tube current: 150 mA
X-ray wavelength: Cu-K$\alpha$ line (1.5418 Å)
Optical system: focusing method
Slit configuration: solar slit 2.5°, divergence slit 0.625°, K$\beta$ filter (Ni plate)
Detector: semiconductor detector
Measurement range: 20 = 10-60 deg
Step width, scan speed: 2.5 deg, 0.02 deg/sec

Example 1

Into a round bottomed flask (volume: 100 mL), under argon atmosphere, 0.471 g (0.0100 mol) of lithium sulfide and 0.759 g (0.0034 mol) of diphosphorus pentasulfide were introduced as raw materials. A stirring bar was introduced, and with stirring with a stirrer, 10 mL of tetrahydrofuran was added as a non-alcohol solvent, and mixing (rotation number: 300 rpm) was performed at a room temperature (23°C) for 12 hours to obtain a mixture (fluid 1-1) containing the raw materials, reaction products (containing $Li_3PS_4$), and the non-alcohol solvent (tetrahydrofuran).

Next, into another round bottomed flask (volume: 100 mL), under argon atmosphere, 0.377 g (0.0080 mol) of lithium sulfide, 0.365 g (0.0068 mol) of ammonium chloride ($NH_4Cl$), and 0.401 g (0.0041 mol) of ammonium bromide ($NH_4Br$) were introduced as raw materials. A stirring bar was introduced, and with stirring with a stirrer, 30 mL of ethanol was added as an alcohol solvent, and mixing was performed at a room temperature (23°C) for 30 minutes to obtain a solution (fluid 1-2) containing the raw materials, reaction products, and the alcohol solvent (ethanol).

Then, the fluid 1-1 and the fluid 1-2 obtained as described above were mixed at a room temperature (23°C) for 5 minutes to prepare a solution containing a solid electrolyte precursor.

The obtained solution was subjected to drying under vacuum at 150°C for 2 hours, followed by drying at 200°C for 2 hours to obtain a solid electrolyte precursor.

The obtained solid electrolyte precursor was subjected to firing at 430°C for 8 hours to obtain a sulfide solid electrolyte.

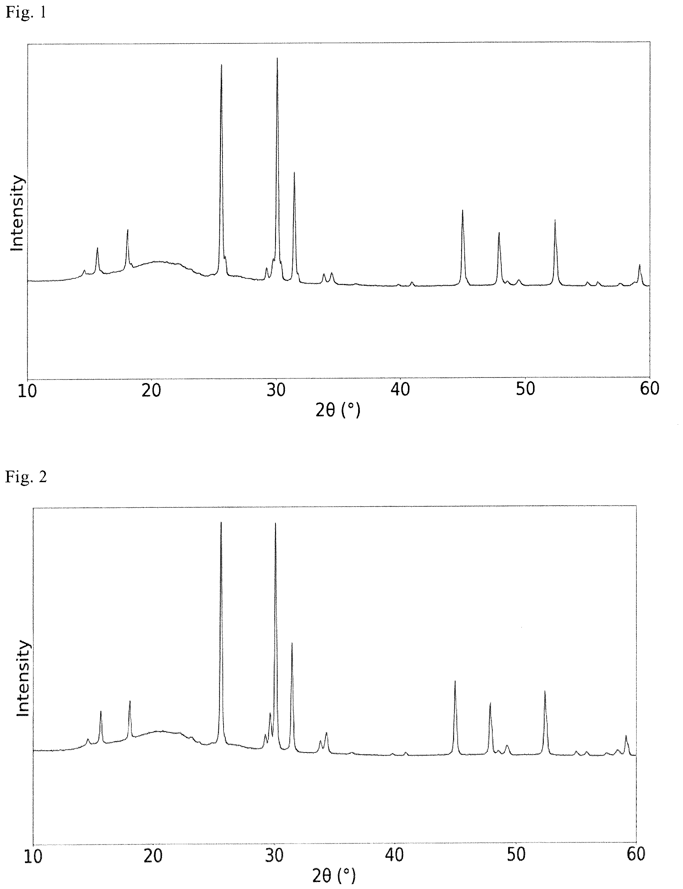

The obtained sulfide solid electrolyte was subjected to powdery XRD diffractometry. The result is shown in Fig. 1. The ionic conductivity was measured, and the ionic conductivity was 5.3 mS/cm.

Comparative Example 1

Into a round bottomed flask (volume: 100 mL), under argon atmosphere, 0.471 g (0.0100 mol) of lithium sulfide and 0.759 g (0.0034 mol) of diphosphorus pentasulfide were introduced as raw materials. A stirring bar was introduced, and with stirring with a stirrer, 10 mL of tetrahydrofuran was added, and mixing (rotation number: 300 rpm) was performed at a room temperature (23°C) for 12 hours to obtain a mixture.

Separately from the mixture, 0.126 g (0.0027 mol) of lithium sulfide, 0.289 g (0.0068 mol) of lithium chloride (LiCl), and 0.356 g (0.0041 mol) of lithium bromide (LiBr) were dissolved in 10 mL of ethanol to prepare a solution.

Next, the solution and 20 mL of ethanol were added to the mixture and mixing was performed at a room temperature (23°C) for 5 minutes, and then, the resulting solution was subjected to drying under vacuum at 150°C for 2 hours to obtain a powder. The obtained powder was subjected to firing at 430°C for 2 hours to obtain a sulfide solid electrolyte. The obtained sulfide solid electrolyte was a black powder.

The obtained sulfide solid electrolyte was subjected to powdery XRD diffractometry. The result is shown in Fig. 2. The ionic conductivity was measured. The ionic conductivity was 4.4 mS/cm.

The relation among the halogen source, the aspect of production of the solution, and the ionic conductivity in Example 1 and Comparative Example 1 is shown in Table 1.

Table 1

|  |  | Example 1 | Comparative Example 1 |
|---|---|---|---|
| Halogen source | - | NH4Cl/NH4Br | LiCl/LiBr |
| Aspect of production of solution | - | First aspect | First aspect |
| Ionic conductivity | mS/cm | 5.3 | 4.4 |

Example 2

Into a round bottomed flask (volume: 100 mL), under argon atmosphere, 0.597 g (0.0127 mol) of lithium sulfide, 0.759 g (0.0034 mol) of diphosphorus pentasulfide, 0.365 g (0.0068 mol) of ammonium chloride ($NH_4Cl$), and 0.401 g (0.0041 mol) of ammonium bromide ($NH_4Br$) were introduced as raw materials. A stirring bar was introduced, and with stirring with a stirrer, 10 mL of tetrahydrofuran was added as a non-alcohol solvent, and mixing (rotation number: 300 rpm) was performed at a room temperature (23°C) for 12 hours to obtain a mixture (fluid 2-1) containing the raw materials, reaction products (containing $Li_3PS_4$), and the non-alcohol solvent (tetrahydrofuran).

Next, 20 mL of ethanol was supplied as an alcohol solvent, and mixing was further performed at a room temperature (23°C) for 5 minutes to prepare a solution containing a solid electrolyte precursor.

The obtained solution was subjected to drying under vacuum at 150°C for 2 hours, followed by drying at 200°C for 2 hours to obtain a solid electrolyte precursor.

The obtained solid electrolyte precursor was subjected to firing at 430°C for 8 hours to obtain a sulfide solid electrolyte.

The ionic conductivity of the obtained sulfide solid electrolyte was measured, and the ionic conductivity was 4.3 mS/cm.

Comparative Example 2

Into a round bottomed flask (volume: 100 mL), under argon atmosphere, 0.597 g (0.0127 mol) of lithium sulfide, 0.759 g (0.0034 mol) of diphosphorus pentasulfide, 0.289 g (0.0068 mol) of lithium chloride (LiCl), and 0.356 g (0.0041 mol) of lithium bromide (LiBr) were introduced as raw materials. A stirring bar was introduced, and with stirring with a stirrer, 10 mL of tetrahydrofuran was added as a non-alcohol solvent, and mixing (rotation number: 300 rpm) was performed at a room temperature (23°C) for 12 hours to obtain a mixture (fluid 2-1) containing the raw materials, reaction products (containing $Li_3PS_4$), and the non-alcohol solvent (tetrahydrofuran).

Next, 30 mL of ethanol was supplied as an alcohol solvent and mixing was further performed for 5 minutes to prepare a solution containing a solid electrolyte precursor at 200°C.

Vacuum drying was performed at 200°C for 2 hours to obtain a solid electrolyte precursor.

The obtained solid electrolyte precursor was subjected to firing at 430°C for 8 hours to obtain a sulfide solid electrolyte.

The ionic conductivity of the obtained sulfide solid electrolyte was measured, and the ionic conductivity was 3.8 mS/cm.

The relation among the halogen source, the aspect of production of the solution, and the ionic conductivity in Example 2 and Comparative Example 2 is shown in Table 2.

Table 2

|  |  | Example 2 | Comparative Example 2 |
|---|---|---|---|
| Halogen source | - | NH4Cl/NH4Br | LiCl/LiBr |
| Aspect of production of solution | - | Second aspect | Second aspect |
| Ionic conductivity | mS/cm | 4.3 | 3.8 |

Example 3

Into a mortar, under argon atmosphere, 0.847 g (0.0185 mol) of lithium sulfide, 0.759 g (0.0034 mol) of diphosphorus pentasulfide, 0.365 g (0.0068 mol) of ammonium chloride ($NH_4Cl$), and 0.401 g (0.0041 mol) of ammonium bromide ($NH_4Br$) were introduced as raw materials and were mixed to obtain a solid electrolyte precursor.

The obtained solid electrolyte precursor was subjected to drying under vacuum at 200°C for 2 hours.

Furthermore, the dried solid electrolyte precursor was subjected to firing at 430°C for 8 hours to obtain a sulfide solid electrolyte.

The ionic conductivity of the obtained sulfide solid electrolyte was measured, and the ionic conductivity was 1.9 mS/cm.

It was found from the results of Examples 1 to 3 that the sulfide solid electrolyte obtained by the production method of this embodiment is a high quality sulfide solid electrolyte that exhibits a high ionic conductivity. It was also found from the results of Examples 1 and 2 that a sulfide solid electrolyte having a higher ionic conductivity can be obtained according to the production method of the aspect 1 or aspect 2. Furthermore, it was found that the sulfide solid electrolyte obtained in Example 1 had peaks at $2\theta=15.5°$, 18.0°, 25.0°, 30.0°, 31.4°, 45.3°, 47.0°, and 52.0° as shown in the X-ray diffraction spectrum of Fig. 1, and thus, was a sulfide solid electrolyte having an argyrodite-type crystal structure.

On the other hand, since the sulfide solid electrolyte of Comparative Example 1 in which an ammonium halide was not used as a raw material was a black powder, it is considered that the sulfide solid electrolyte contained a carbide of an impurity (such as, for example, lithium ethoxide) which was contained in the solid electrolyte precursor before firing, resulting in a lower ionic conductivity as compared with those of Examples. According to the X-ray diffraction spectrum of Fig. 2, the typical peaks of an argyrodite-type crystal structure were found, and there were two peaks found at $2\theta=22.2°$ and 23.3° which were not found in Examples 1 and 2. These peaks are assumed to be attributable to an impurity (carbide of lithium ethoxide and the like).

Industrial Applicability

According to the production method of this embodiment, it is possible to efficiently produce a high-quality sulfide solid electrolyte that contains a small amount of impurities and has a high ionic conductivity. The obtained sulfide solid electrolyte can be suitably used for a battery, in particular, a battery for use in information-related instruments, communication instruments, and so on, such as personal computers, video cameras, and mobile phones.

**Claims**

1.  A method for producing a sulfide solid electrolyte having an argyrodite-type crystal structure, the method comprising

    mixing lithium sulfide, a phosphorus sulfide, and an ammonium halide to produce a solid electrolyte precursor, and
    firing the solid electrolyte precursor.

2.  The method for producing a sulfide solid electrolyte having an argyrodite-type crystal structure according to claim 1, wherein an alcohol solvent and a non-alcohol solvent are further mixed in addition to the lithium sulfide, the phosphorus sulfide, and the ammonium halide to prepare a solution containing the solid electrolyte precursor.

3.  The method for producing a sulfide solid electrolyte having an argyrodite-type crystal structure according to claim 2, wherein the method comprises

a step 1-1 of mixing lithium sulfide, the phosphorus sulfide, and the non-alcohol solvent to prepare a fluid 1-1,
a step 1-2 of mixing lithium sulfide, the ammonium halide, and the alcohol solvent to prepare a fluid 1-2, and
a step 1-3 of mixing the fluid 1-1 and the fluid 1-2 to prepare the solution containing the solid electrolyte precursor.

4. The method for producing a sulfide solid electrolyte having an argyrodite-type crystal structure according to claim 3, wherein in the step 1-1, the lithium sulfide, the phosphorus sulfide, and the non-alcohol solvent are mixed by using a mixer or a stirrer.

5. The method for producing a sulfide solid electrolyte having an argyrodite-type crystal structure according to claim 3 or 4, wherein in the step 1-2, the lithium sulfide, the ammonium halide, and the alcohol solvent are mixed by using a mixer or a stirrer.

6. The method for producing a sulfide solid electrolyte having an argyrodite-type crystal structure according to any one of claims 3 to 5, wherein the non-alcohol solvent is used in the step 1-1 in an amount of 100 mL or more and 1000 mL or less relative to 100 g of the total amount of the lithium sulfide and the phosphorus sulfide in the step 1-1.

7. The method for producing a sulfide solid electrolyte having an argyrodite-type crystal structure according to any one of claims 3 to 6, wherein the alcohol solvent is used in the step 1-2 in an amount of 200 mL or more and 3000 mL or less relative to 100 g of the total amount of the lithium sulfide and the ammonium halide in the step 1-2.

8. The method for producing a sulfide solid electrolyte having an argyrodite-type crystal structure according to claim 2, wherein the method comprises

a step 2-1 of mixing the lithium sulfide, the phosphorus sulfide, the ammonium halide, and the non-alcohol solvent to prepare a fluid 2-1, and
a step 2-2 of mixing the alcohol solvent with the fluid 2-1 to prepare the solution containing the solid electrolyte precursor.

9. The method for producing a sulfide solid electrolyte having an argyrodite-type crystal structure according to claim 8, wherein in the step 2-1, the lithium sulfide, the phosphorus sulfide, the ammonium halide, and the non-alcohol solvent are mixed by using a mixer or a stirrer.

10. The method for producing a sulfide solid electrolyte having an argyrodite-type crystal structure according to claim 8 or 9, wherein the non-alcohol solvent is used in the step 2-1 in an amount of 100 mL or more and 1000 mL or less relative to 100 g of the total amount of the lithium sulfide, the phosphorus sulfide, and the ammonium halide in the step 2-1.

11. The method for producing a sulfide solid electrolyte having an argyrodite-type crystal structure according to any one of claims 8 to 10, wherein the alcohol solvent is used in the step 2-2 in an amount of 1000 mL or more and 3000 mL or less relative to 100 g of the total amount of the lithium sulfide, the phosphorus sulfide, and the ammonium halide in the step 2-1.

12. The method for producing a sulfide solid electrolyte having an argyrodite-type crystal structure according to any one of claims 2 to 11, wherein the non-alcohol solvent is at least one selected from an ester solvent, an ether solvent, an aldehyde solvent, a ketone solvent, an amine solvent, an amide solvent, a nitro solvent, and a nitrile solvent.

13. The method for producing a sulfide solid electrolyte having an argyrodite-type crystal structure according to any one of claims 1 to 12, wherein the firing is performed at 200°C or higher.

Fig. 1

Fig. 2

## INTERNATIONAL SEARCH REPORT

| International application No. |
| --- |
| **PCT/JP2022/044389** |

**A. CLASSIFICATION OF SUBJECT MATTER**

*H01B 13/00*(2006.01)i; *C01B 25/14*(2006.01)i; *H01G 11/56*(2013.01)i; *H01M 10/0562*(2010.01)i
FI: H01B13/00 Z; H01G11/56; H01M10/0562; C01B25/14

According to International Patent Classification (IPC) or to both national classification and IPC

**B. FIELDS SEARCHED**

Minimum documentation searched (classification system followed by classification symbols)

H01B13/00; C01B25/14; H01G11/56; H01M10/0562

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-145489 A (PANASONIC INTELLECTUAL PROPERTY MANAGEMENT CO., LTD.) 29 August 2019 (2019-08-29) paragraphs [0014]-[0150], fig. 1-9 | 1, 13 |
| A | | 2-12 |

☐ Further documents are listed in the continuation of Box C.   ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **24 January 2023** | **31 January 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/044389**

| Patent document cited in search report | Publication date (day/month/year) | Patent family member(s) | Publication date (day/month/year) |
|---|---|---|---|
| JP 2019-145489 A | 29 August 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019145489 A
- JP 2013201110 A
- WO 2018054709 A
- WO 2019169459 A